# EUROPEAN PATENT APPLICATION

(11) **EP 4 501 568 A1**
(43) Date of publication of application: **05.02.2025**
(21) Application number: 23893524.1
(22) Date of filing: 26.10.2023
(51) Int. Cl.: B28D 1/14, B28D 7/00

(54) **AUTONOMOUS-DRIVING AND ACCURATE-POSITIONING DRILLING ROBOT**

(30) Priority: 23.11.2022 CN 202223107944 U
(71) Applicant: CSC Robotic Engineering Limited, Kowloon Hong Kong (HK)
(72) Inventor: REN, Yuxing, Hong Kong Spinners Ind Bldg, Phase VI, 481-483 Castle Peak Rd, Kowloon Hong Kong (CN); XIE, Shaoqin, Hong Kong Spinners Ind Bldg, Phase VI, 481-483 Castle Peak Rd, Kowloon Hong Kong (CN); WONG, Kit Nga, Hong Kong Spinners Ind Bldg, Phase VI, 481-483 Castle Peak Rd, Kowloon Hong Kong (CN); NG, Ka Kui, Hong Kong Spinners Ind Bldg, Phase VI, 481-483 Castle Peak Rd, Kowloon Hong Kong (CN); LI, Sean, Hong Kong Spinners Ind Bldg, Phase VI, 481-483 Castle Peak Rd, Kowloon Hong Kong (CN); XIAO, Mingxiang, Hong Kong Spinners Ind Bldg, Phase VI, 481-483 Castle Peak Rd, Kowloon Hong Kong (CN)
(74) Representative: Chung, Hoi Kan
(86) International application number: PCT/CN2023/126629
(87) International publication number: WO 2024/109433

(57) **Abstract**

The present invention relates to the technical field of drilling equipment, and in particular, to an automatic driving and accurate positioning drilling robot, including an unmanned ground vehicle. A top portion of the unmanned ground vehicle is provided with a laser radar for drawing a map and navigation, a front side and a rear side of the unmanned ground vehicle are respectively provided with front ultrasonic sensors and rear ultrasonic sensors for perceiving and thereby preventing collision, a manipulator is arranged on the unmanned ground vehicle, and a percussion drill is arranged on the manipulator. In a drilling process, map drawing and performing navigation are conducted through the laser radar, the ultrasonic sensors assist in navigation. The manipulator and the horizontal sensor cooperate to level the percussion drill to drill holes in the ground; the manipulator and the three-dimensional camera cooperate so that a drilling position can be found and a drilling angle can be adjusted on the wall and the ground; and the robot is suitable for automatically drilling at a low position inside and outside a house according to a set drawing, the drilling cost is reduced, the drilling efficiency is improved, and harm to the health of workers caused by drilling dust is avoided.

## Description

### TECHNICAL FIELD

The present invention relates to the technical field of drilling equipment, and in particular, to an automatic driving and accurate positioning drilling robot.

### BACKGROUND

In building construction, it is often necessary to drill holes on the ground or a wall surface, for example, when a bracket-type floor tile is installed indoors, it is necessary to drill on the ground to mount the bracket. For another example, when a dry-hanging type wall brick is mounted on the wall surface, it is necessary to drill on the wall surface.

Currently, most of drilling operations still need manual drilling, which is low in efficiency and high in cost, and dust generated by drilling may endanger the body health of workers.

In the prior art, the inventor of the invention has previously designed an automatic drilling positioning and anchor bolt fixing robot (see Chinese Patent Application Publication No. CN212706791U), including a movable lifting platform mounted with a laser radar, where the movable lifting platform is provided with an operation platform; the operation platform is provided with a mechanical arm, a drilling tool, and an expansion bolt mounting tool, a tail end of the mechanical arm is provided with a first connecting device, and the drilling tool and the expansion bolt mounting tool are respectively provided with a second connecting device; the operation platform is also provided with an expansion bolt supply device, which includes an arc-shaped expansion bolt clamp and a guide pipe arranged at one end of the expansion bolt clamp, a lower end of the guide pipe is provided with a push rod, and an expansion bolt driver is further arranged on the expansion bolt clamp. The robot can automatically position drilling and mount expansion bolts without ascend operation by a constructor, ensuring safety and health of the constructor and improving work efficiency.

However, this robot is mainly suitable for automatic drilling positioning and anchor bolt fixing at a high position, and is not suitable for performing drilling operation at a low position indoor and outdoor.

### SUMMARY

The invention aims to provide an automatic driving and accurate positioning drilling robot, so as to solve a technical problem in the prior art that drilling operation of building construction still needs to rely on manual work, which is low in efficiency, high in cost, and endangers human health.

To resolve the foregoing technical problem, the following technical solutions are used in the present invention:

an automatic driving and accurate positioning drilling robot is provided, including an unmanned ground vehicle, where a top portion of the unmanned ground vehicle is provided with a laser radar for drawing a map and performing navigation, a front side and a rear side of the unmanned ground vehicle are respectively provided with front ultrasonic sensors and rear ultrasonic sensors for perceiving and preventing collision, the laser radar, the front ultrasonic sensors, and the rear ultrasonic sensors are electrically connected to a control computer of the unmanned ground vehicle, respectively; and a manipulator is arranged on the unmanned ground vehicle, and a percussion drill is arranged on the manipulator.

Preferably, the unmanned ground vehicle is a crawler-type electric carrying vehicle, the front side of the unmanned ground vehicle is provided with a mounting platform at a low position, the rear side of the unmanned ground vehicle is provided with a navigation platform at a high position, the manipulator is arranged on the mounting platform, and the laser radar is arranged on the navigation platform.

Preferably, the rear side of the unmanned ground vehicle is provided with a detachable battery compartment, and the battery compartment is provided with a replaceable battery.

Preferably, the percussion drill is provided with a three-dimensional camera for finding a drilling position and a drilling angle, and the three-dimensional camera is electrically connected to the control computer of the unmanned ground vehicle.

Preferably, a rear side of the percussion drill is provided with a force sensor for sensing whether a steel bar is impacted during drilling, and the force sensor is electrically connected to the control computer of the unmanned ground vehicle.

Preferably, the percussion drill is provided with a horizontal sensor for feeding back an absolute vertical degree of the percussion drill relative to the earth, and the horizontal sensor is electrically connected to the control computer of the unmanned ground vehicle.

Preferably, the unmanned ground vehicle is provided with a WiFi communication module, a 4G/5G communication module, and an Internet networking module, and the WiFi communication module, the 4G/5G communication module, and the Internet networking module are all electrically connected to the control computer of the unmanned ground vehicle.

Preferably, a human-computer interaction terminal is further included, where the human-computer interaction terminal is provided with a screen, and the human-computer interaction terminal communicates with the control computer of the unmanned ground vehicle in a WiFi communication, 4G/5G communication or Internet communication manner.

Preferably, the front ultrasonic sensors are arranged on both sides of the front side of the unmanned ground vehicle, and the rear ultrasonic sensors are arranged on both sides of the rear side of the unmanned ground vehicle.

Preferably, the manipulator is a six-axis manipulator.

Compared with the prior art, the present invention has the following beneficial effects: the automatic driving and accurate positioning drilling robot includes an unmanned ground vehicle. A top portion of the unmanned ground vehicle is provided with a laser radar for drawing a map and performing navigation, a front side and a rear side of the unmanned ground vehicle are respectively provided with front ultrasonic sensors and rear ultrasonic sensors for perceiving and thereby preventing collision, a manipulator is arranged on the unmanned ground vehicle, and a percussion drill is arranged on the manipulator. In a drilling process, map drawing and performing navigation are conducted through the laser radar, the ultrasonic sensors assist in navigation, and the manipulator and the horizontal sensor cooperate to level the percussion drill to drill holes in the ground; the manipulator and the three-dimensional camera cooperate so that a drilling position can be found and a drilling angle can be adjusted on the wall; a force sensor can detect whether a steel bar is impacted during drilling; and the unmanned ground vehicle is provided with a replaceable battery, which can be replaced to enable long-time operation; and the robot is suitable for automatically drilling at a low position inside and outside a house according to a set drawing, the drilling cost is reduced, the drilling efficiency is improved, and harm to the health of workers caused by drilling dust is avoided.

### BRIEF DESCRIPTION OF DRAWINGS

The drawings described herein are intended for a further understanding of the present invention, constitute a part of the specification, and are used to explain the present invention together with the embodiments of the present invention, and do not constitute a limitation on the present invention. In the drawings:
FIG. 1 is a schematic diagram 1 of a three-dimensional structure of an embodiment of an automatic driving and accurate positioning drilling robot according to the present invention.
FIG. 2 is a schematic diagram 2 of a three-dimensional structure of an embodiment of an automatic driving and accurate positioning drilling robot according to the present invention.
FIG. 3 is a schematic diagram when a battery compartment cover is opened in an embodiment of an automatic driving and accurate positioning drilling robot according to the present invention.
FIG. 4 is a schematic structural diagram of a battery compartment in an embodiment of an automatic driving and accurate positioning drilling robot according to the present invention.
FIG. 5 is a schematic structural diagram of a percussion drill in an embodiment of an automatic driving and accurate positioning drilling robot according to the present invention.
FIG. 6 is a schematic structural diagram of a human-computer interaction terminal in an embodiment of an automatic driving and accurate positioning drilling robot according to the present invention.
FIG. 7 is a schematic diagram of sensing areas of a laser radar and ultrasonic sensors at front and rear sides that are in a front-rear direction in an embodiment of an automatic driving and accurate positioning drilling robot according to the present invention.
FIG. 8 is a schematic diagram of sensing areas of a laser radar in a left-right direction in an embodiment of an automatic driving and accurate positioning drilling robot according to the present invention.
FIG. 9 is a schematic planning diagram of a drilling path in a construction site in an embodiment of an automatic driving and accurate positioning drilling robot according to the present invention.
FIG. 10 is a schematic diagram of an sensing area of a three-dimensional camera in an embodiment of an automatic driving and accurate positioning drilling robot according to the present invention.
FIG. 11 is a schematic diagram of drilling in a wall in an embodiment of an automatic driving and accurate positioning drilling robot according to the present invention.
FIG. 12 is a schematic diagram of drilling in a wall after error adjustment in an embodiment of an automatic driving and accurate positioning drilling robot according to the present invention.

### DETAILED DESCRIPTION OF THE EMBODIMENTS

The technical solutions of the embodiments of the present invention are clearly and completely described below with reference to the accompanying drawings in the embodiments of the present invention. Apparently, the described embodiments are merely some rather than all of the embodiments of the present invention. Based on the embodiments in the present invention, all other embodiments obtained by those of ordinary skill in the art without making creative labor fall within the scope of protection of the present invention.

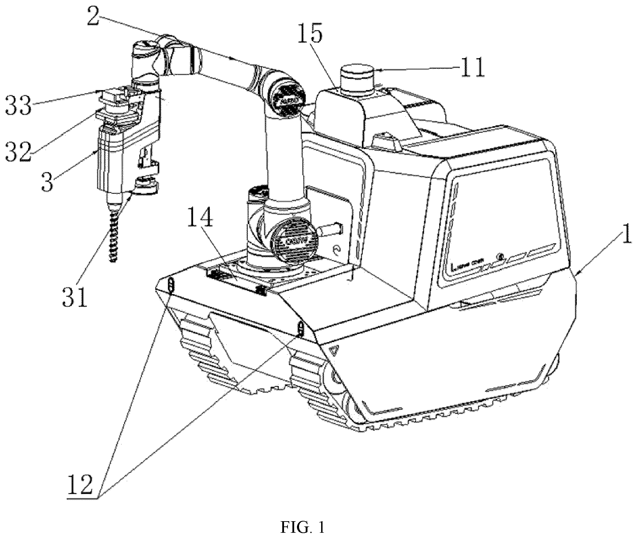

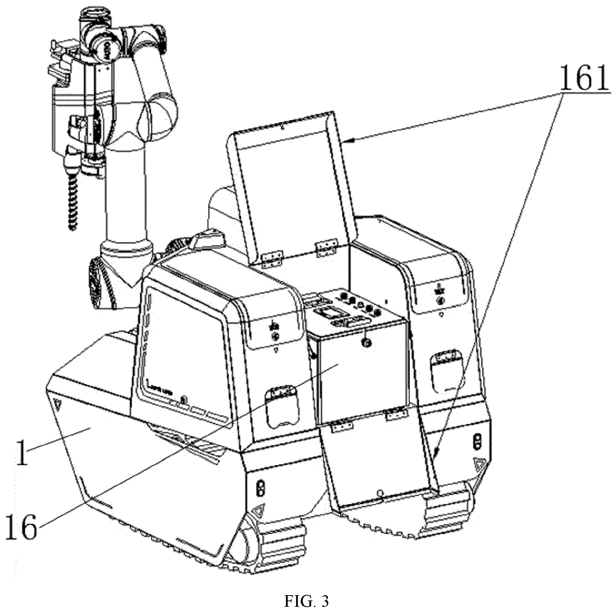

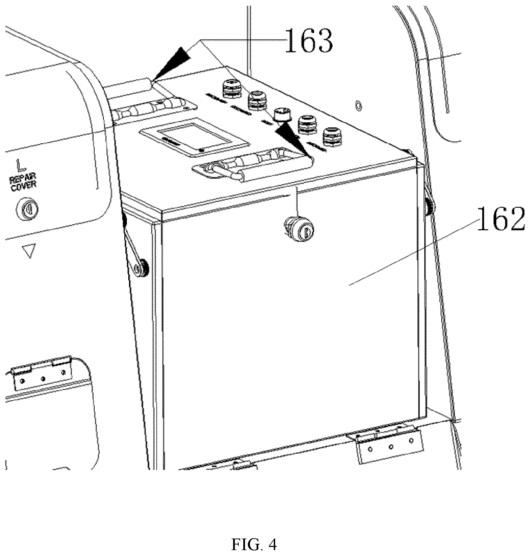

In an embodiment, an automatic driving and accurate positioning drilling robot is provided, referring to FIG. 1 to FIG. 12.

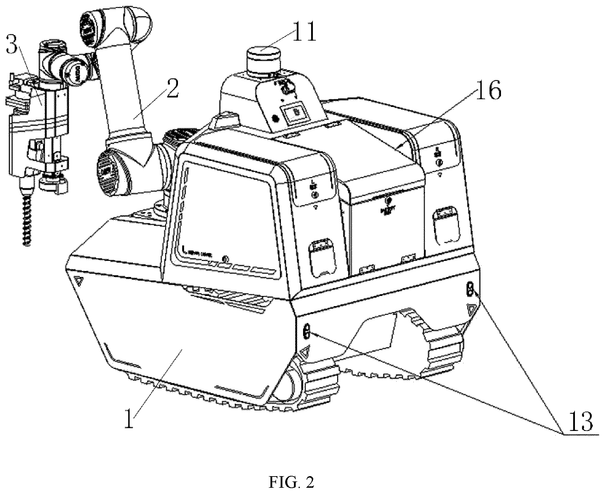

As shown in FIG. 1 and FIG. 2, the automatic driving and accurate positioning drilling robot includes an unmanned ground vehicle 1, the unmanned ground vehicle 1 is a crawler-type electric carrying vehicle, a battery pack, driving motors and a control computer is arranged on the unmanned ground vehicle 1, the battery pack supplies power to the driving motor and the control computer, the control computer controls the driving motor to work, the driving motors include a forward-backward driving motor and a left-right turning motor, and a crawler belt is driven by the driving motors to move forwards and backwards and turn.

A top portion of the unmanned ground vehicle 1 is provided with a laser radar 11 for drawing a map and navigation, a front side and a rear side of the unmanned ground vehicle 1 are respectively provided with front ultrasonic sensors 12 and rear ultrasonic sensors 13 for perceiving and preventing collision, and the laser radar 11, the front ultrasonic sensors 12 and the rear ultrasonic sensors 13 are electrically connected to the control computer of the unmanned ground vehicle, respectively. As shown in FIG. 1 and FIG. 2, the front ultrasonic sensors 12 are arranged on both sides of the front side of the unmanned ground vehicle 1, and the rear ultrasonic sensors 13 are arranged on both sides of the rear side of the unmanned ground vehicle 1. The four ultrasonic sensors are used for compensating a sensing blind area of the laser radar 11 during navigation, so as to prevent the front and rear sides of the unmanned ground vehicle 1 from hitting an obstacle.

As shown in FIG. 1 and FIG. 2, a manipulator 2 is arranged on the unmanned ground vehicle 1, and a percussion drill 3 is arranged on the manipulator 2. The manipulator 2 herein is a six-axis manipulator, has six degrees of freedom, and can rotate to any direction in space, thereby facilitating flexible drilling. The front side of the unmanned ground vehicle 1 is provided with a mounting platform 14 at a low position, the rear side of the unmanned ground vehicle is provided with a navigation platform 15 at a high position, the manipulator 2 is arranged on the mounting platform 14, and the laser radar 11 is arranged on the navigation platform 15. The mounting platform 14 is arranged to facilitate the manipulator 2 to touch a drilling position on the ground or a lower portion of a wall. The navigation platform 15 is arranged, so that the laser radar 11 has a wider sensing field of view.

As shown in FIG. 2, FIG. 3 and FIG. 4, the rear side of the unmanned ground vehicle 1 is provided with a detachable battery compartment 16, the battery compartment 16 is formed by two battery compartment covers 161 hinged to the unmanned ground vehicle 1, the battery compartment 16 is provided with a replaceable battery 162, and the replaceable battery 162 is provided with a handle 163, so as to facilitate removal of the replaceable battery 162.

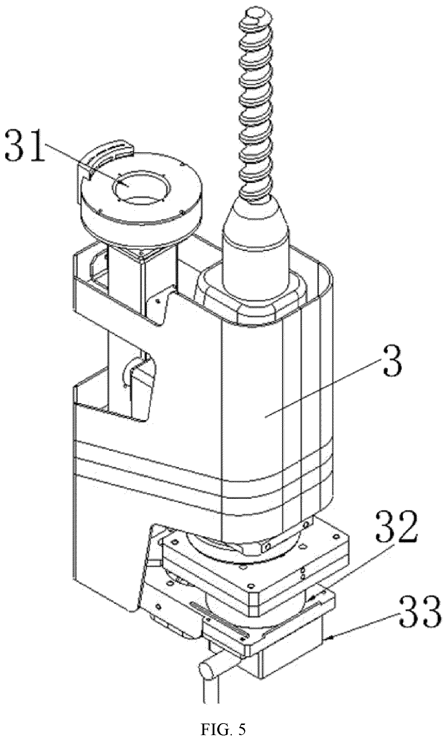

As shown in FIG. 1 and FIG. 5, the percussion drill 3 is provided with a three-dimensional camera 31, and the three-dimensional camera 31 is used for finding a drilling position and a drilling angle, the three-dimensional camera 31 is electrically connected to the control computer of the unmanned ground vehicle 1 to transmit photographed three-dimensional information to the control computer.

A rear side of the percussion drill 3 is provided with a force sensor 32, the force sensor 32 is used for sensing whether a steel bar is impacted during drilling, and the force sensor 32 is electrically connected to the control computer of the unmanned ground vehicle 1.

The percussion drill 3 is further provided with a horizontal sensor 33 for feeding back an absolute vertical degree of the percussion drill relative to the earth, and the horizontal sensor 33 is electrically connected to the control computer of the unmanned ground vehicle 1.

The unmanned ground vehicle 1 is provided with a WiFi communication module, a 4G/5G communication module, and an Internet networking module, and the WiFi communication module, the 4G/5G communication module, and the Internet networking module are all electrically connected to the control computer of the unmanned ground vehicle, so that the unmanned ground vehicle 1 can communicate with the outside in a WiFi communication, 4G/5G communication and Internet communication manner. The communication is to receive a control signal and transmit measured data of related sensors outwards.

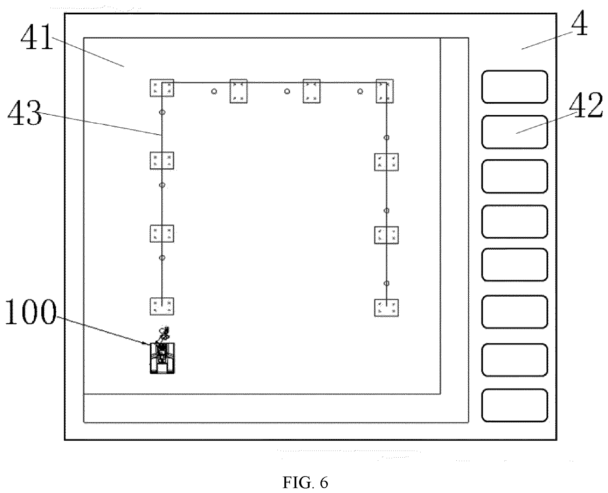

The automatic driving and accurate positioning drilling robot further includes a human-computer interaction terminal 4 as shown in FIG. 6, and the human-computer interaction terminal 4 is provided with a screen 41 and a plurality of manipulation buttons 42. A map of a drilling area of the robot 100 can be displayed on the screen 41. The map includes a drilling path 43 planned by the robot 100, and the human-computer interaction terminal 4 communicates with the control computer of the unmanned ground vehicle 1 in a WiFi communication, 4G/5G communication or Internet communication manner.

The manipulation buttons 42 include, but are not limited to, a driving direction control button, a manipulator direction control button, a start drilling button, an emergency stop button, a shutdown button, and the like. The screen 41 is provided with a virtual button for adjusting drilling parameters, so that a drilling depth, a drilling size, a drill bit perpendicularity, and the like can be adjusted.

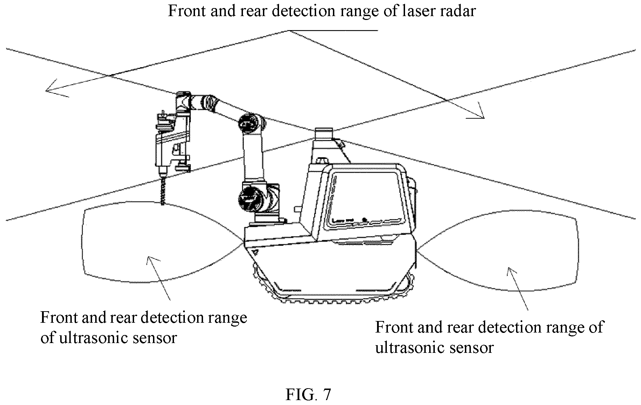

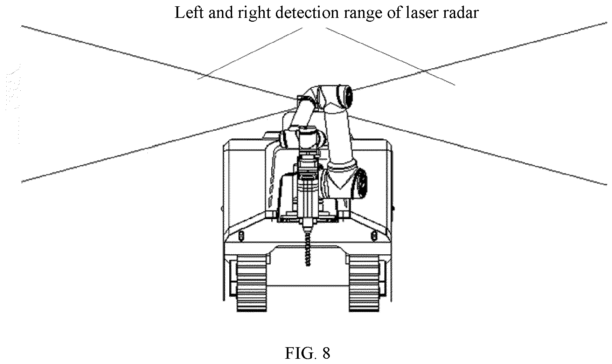

The working principle of the automatic driving and accurate positioning drilling robot is as follows:
(1) Unmanned ground vehicle navigation: as shown in FIG. 7 and FIG. 8, the laser radar and the ultrasonic sensor on the unmanned ground vehicle 1 have a sufficient sensing range. The laser radar 11 on the unmanned ground vehicle 1 is a laser radar with a centimeter or millimeter precision resolution, and the laser radar 11 can meet scanning requirements of automatic navigation and anti-collision. Motion control of the unmanned ground vehicle 1 is carried out by the control computer and a stored algorithm that are in the robot which drive a chassis motor to move according to a real-time feedback signal of the laser radar 11.
   The ultrasonic sensors at front side and rear sides of the unmanned ground vehicle 1 can effectively compensate for a space at a short distance that cannot be scanned by the laser radar 11, and can meet an anti-collision requirement. In order to avoid an accident caused by a collision, when any object enters the sensing range of the ultrasonic sensor, the control computer will control the robot to stop automatically completely.
(2) Map construction: a simultaneous localization and mapping (SLAM) map is constructed by the control computer based on sensing data of the laser radar. When the robot is deployed on a new site for the first time, manual or automatic scanning is needed, and a local real-time SLAM map is established. The SLAM map is an instant reference for planning a drilling path of the robot and realizing indoor positioning of the robot. The precision of the SLAM map here depends on the selected laser radar and an establishment algorithm of the SLAM map.

When manually controlling an unmanned ground vehicle to enter a site in a remote control manner for the first time, the unmanned ground vehicle moves around the site. When the unmanned ground vehicle moves around the site, the laser radar on the robot continuously scans the site, and a map is constructed for the site in real time in cooperation with an SLAM map drawing algorithm.

A drilling position in a design drawing (a CAD/BIM drawing) is input to the control computer of the robot, and then the scanning map and the input map are manually paired on a touch screen of the human-computer interaction terminal through translation, rotation, scaling and the like, and the input map is manually segmented if necessary, so as to pair the map part-by-part for positions most suitable for the action of each hole.

Drilling path planning: the control computer of the robot is provided with the SLAM map and design drawing fitting software. A drilling position in a drawing designed by BIM or CAD software can be calibrated on the SLAM map, and a drilling path and a parking operation position are automatically planned according to fitted drilling position coordinates and a design coverage range of a mechanical arm and laser radar vision. A user can also define a staying operation point and a staying angle of the robot, and the drilling path composed of a series of staying points through a software interface of the control computer of the robot.

### (3) Drilling operation:

Drilling manner 1: after the robot automatically reaches an operation point, a drilling positioning of the mechanical arm is automatically calculated and adjusted based on drilling coordinates pre-imported by a control system in the robot, and drilling is implemented.

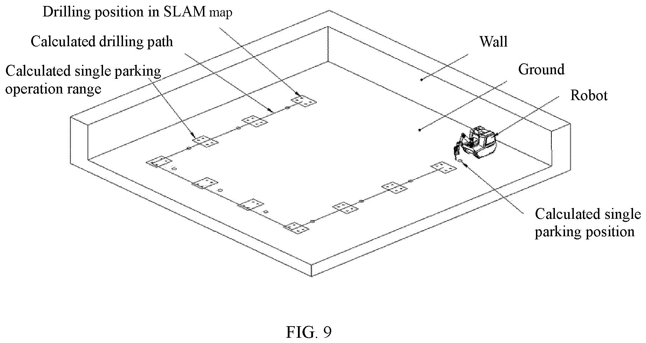

As shown in FIG. 9, drilling positions are paired according to drilling positions on a drilling path and according to a single working range of the robot, the drilling positions are combined into a plurality of drilling position combinations, a direction of a wall is determined according to a scanning of the laser radar and a building design drawing, and a stopping position at a fixed distance from the wall is calculated from the drilling position combination and the wall direction; and the shortest movement distance of the robot is found from the stopping position, so that a planned drilling path and a parking position are generated. The drilling path of the robot can also be modified by the user through the human-computer interaction terminal for adjustment. If needed, the user can also manually set the drilling path and the stopping position on the human-computer interaction terminal completely. Meanwhile, an algorithm in the control computer perceives an obstacle in real time according to information of the laser radars and the short-distance ultrasonic sensors, and real-time adjustment of the path and obstacle avoidance are achieved. During drilling, the whole process of the drilling operation of the robot is limited to a default drilling diameter, and if there are a plurality of drilling diameter requirements on one site, the drill bit needs to be replaced.

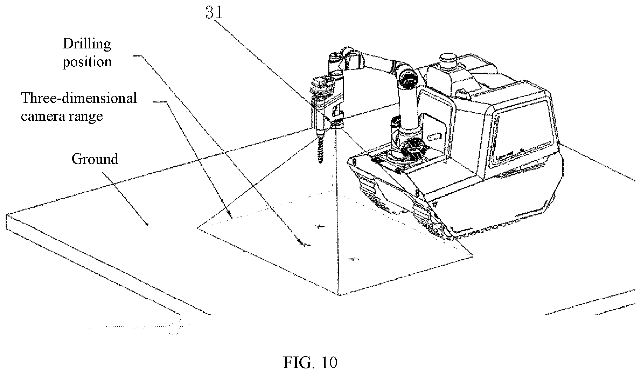

Drilling manner 2: as shown in FIG. 10, after a robot is automatically or manually controlled to reach a working point, the three-dimensional camera arranged on the mechanical arm detects a drilling position in a working range on the ground; if there is a default drilling positioning map, the relative coordinates in a visual range are fed back by the three-dimensional camera, and then drilling is implemented by the robot. The three-dimensional camera mounted on the manipulator of the robot may perform normal video streaming or photographing. Unlike a common camera, the three-dimensional camera may simultaneously output three-dimensional coordinates of each pixel in a photo to form a point cloud, which is used for perceiving a position in a three-dimensional space.

### (4) Drilling position error adjustment:

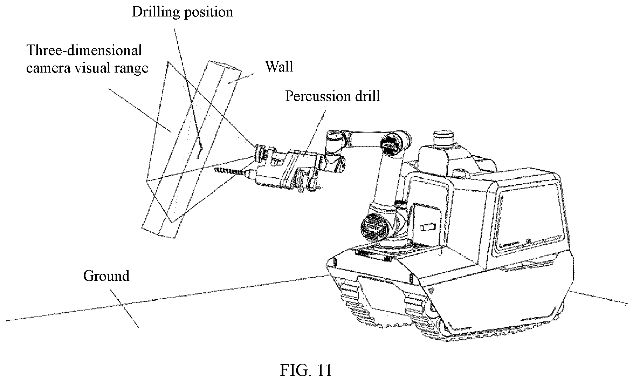

As shown in FIG. 11, in the case of wall drilling, when the robot travels to a staying operation point according to the guidance of the control computer, because a three-dimensional map of the site, including the wall, has been stored in data of the robot through an SLAM map, the robot can appropriately adjust the manipulator, so that a three-dimensional camera and a percussion drill are oriented substantially perpendicular to the ground or the wall that needs to be drilled.

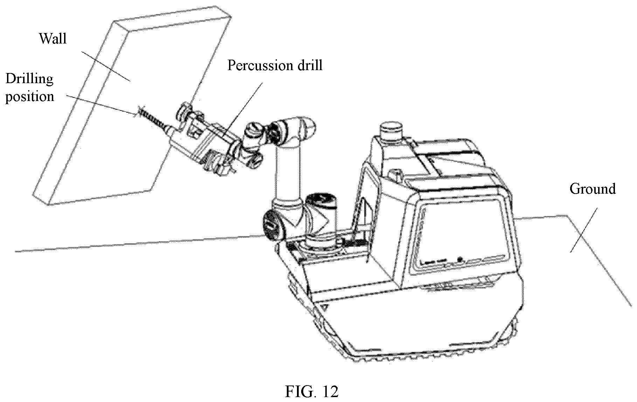

However, because the laser radar and the SLAM map drawing algorithm may have respective errors, the directions of the three-dimensional camera and the percussion drill may not be completely perpendicular to the wall. Therefore, as shown in FIG. 12, before drilling by the drill bit of the percussion drill, the three-dimensional camera scans the ground or the wall of the drilling position coordinates in the robot data for calculating a direction difference between the wall and the percussion drill, and then adjusts a direction of the percussion drill through the manipulator, so that a direction error between the percussion drill and the wall is controlled within a certain range.

When the drilling position error is adjusted, it is not limited to an angle and a position of the wall shown in FIG. 11 and FIG. 12. As long as a position that needs to be drilled is within a reachable range of the manipulator and the manipulator can actually reach this position during drilling, the robot can drill the wall at any angle. Where the manipulator can actually reach this position is defined as: when the manipulator moves to this position, a collision does not occur. For example, when the drilling position is under the ground, it is physically impossible for the manipulator to reach the underground for drilling, and this position is a position that cannot be actually reached.

### (5) Drilling on the ground:

The horizontal sensor is suitable for use in underground drilling. In this case, the three-dimensional camera does not need to be used to adjust the direction of the percussion drill. The horizontal sensor on the manipulator may feed back an absolute vertical degree of the percussion drill relative to the earth.

If the percussion drill is not perpendicular to the ground (perhaps due to a small stone getting stuck under the crawler belt), the robot can control the manipulator to fine-tune the angle, according to the feedback of the horizontal sensor, so that the percussion drill is turned back to be perpendicular.

The robot controls the speed of the percussion drill according to the drilling setting (depth, size); and with reference to a drilling depth, the robot automatically calculates an appropriate speed to drill to the appropriate depth.

(6) Function of the force sensor: during drilling, the force sensor monitors the drilling force during drilling to determine whether there is a steel bar impacting. The determining method includes but is not limited to: a. sudden increase of the drilling force: when the drilling force increases suddenly, the percussion drill is still started, but the force does not decrease after stopping/slowly continuing to move into the hole for a period of time, it indicates that a steel bar is impacted.

(7) Battery replacement: the battery is located at the rear of the robot, and after the compartment cover of the replaceable battery is opened, the battery can be pulled up by a handle as long as the main cable plug is unplugged, and another battery of the same model is replaced to supply power to the robot.

Although embodiments of the present invention have been shown and described, it may be understood by those of ordinary skill in the art that, without departing from the principles and spirit of the present invention, various changes, modifications, replacements, and variations may be made to these embodiments, and the scope of the present invention is limited by the appended claims and equivalents thereof.

## Claims

1. An automatic driving and accurate positioning drilling robot, comprising an unmanned ground vehicle, wherein a top portion of the unmanned ground vehicle is provided with a laser radar for drawing a map and performing navigation, a front side and a rear side of the unmanned ground vehicle are respectively provided with front ultrasonic sensors and rear ultrasonic sensors for perceiving and thereby preventing collision, the laser radar, the front ultrasonic sensors, and the rear ultrasonic sensors are electrically connected to a control computer of the unmanned ground vehicle, respectively; a manipulator is arranged on the unmanned ground vehicle, and a percussion drill is arranged on the manipulator;
the unmanned ground vehicle is a crawler-type electric carrying vehicle, the front side of the unmanned ground vehicle is provided with a mounting platform at a low position, the rear side of the unmanned ground vehicle is provided with a navigation platform at a high position, the manipulator is arranged on the mounting platform, and the laser radar is arranged on the navigation platform; and
the percussion drill is provided with a three-dimensional camera for finding a drilling position and a drilling angle, and the three-dimensional camera is electrically connected to the control computer of the unmanned ground vehicle.

2. The automatic driving and accurate positioning drilling robot according to claim 1, wherein the rear side of the unmanned ground vehicle is provided with a detachable battery compartment, and the battery compartment is provided with a replaceable battery.

3. The automatic driving and accurate positioning drilling robot according to claim 1, wherein a rear side of the percussion drill is provided with a force sensor for sensing whether a steel bar is impacted during drilling, and the force sensor is electrically connected to the control computer of the unmanned ground vehicle.

4. The automatic driving and accurate positioning drilling robot according to claim 1, wherein the percussion drill is provided with a horizontal sensor for feeding back an absolute vertical degree of the percussion drill relative to the earth, and the horizontal sensor is electrically connected to the control computer of the unmanned ground vehicle.

5. The automatic driving and accurate positioning drilling robot according to claim 1, wherein the unmanned ground vehicle is provided with a WiFi communication module, a 4G/5G communication module, and an Internet networking module, and the WiFi communication module, the 4G/5G communication module, and the Internet networking module are all electrically connected to the control computer of the unmanned ground vehicle.

6. The automatic driving and accurate positioning drilling robot according to claim 5, further comprising a human-computer interaction terminal, wherein the human-computer interaction terminal is provided with a screen, and the human-computer interaction terminal communicates with the control computer of the unmanned ground vehicle in a WiFi communication, 4G/5G communication or Internet communication manner.

7. The automatic driving and accurate positioning drilling robot according to claim 1, wherein the front ultrasonic sensors are arranged on both sides of the front side of the unmanned ground vehicle, and the rear ultrasonic sensors are arranged on both sides of the rear side of the unmanned ground vehicle.

8. The automatic driving and accurate positioning drilling robot according to claim 1, wherein the manipulator is a six-axis manipulator.
